# EUROPÄISCHE PATENTSCHRIFT

(11) **EP 0 946 057 B1**
(45) Veröffentlichungstag und Bekanntmachung des Hinweises auf die Patenterteilung: **03.11.2004**
(21) Anmeldenummer: 99106039.3
(22) Anmeldetag: 24.03.1999
(51) Int. Cl.: H04N 5/45, H04N 5/44

(54) **Fernsehgerät mit HF-Signalaufspaltung innerhalb des Tuners**
Television apparatus with HF signal separation in the tuner
Appareil de télévision avec séparation du signal HF à l'intérieur du récepteur

(30) Priorität: 27.03.1998 DE 19813666
(43) Veröffentlichungstag der Anmeldung: 29.09.1999
(73) Patentinhaber: Grundig Multimedia B.V., 1083HJ Amsterdam (NL)
(72) Erfinder: Vanselow, Frank, 90762 Fürth (DE)
(74) Vertreter: Pröll, Jürgen

(56) Entgegenhaltungen:
- EP-A- 0 470 480
- DE-A- 4 447 289
- US-A- 5 285 284
- US-A- 5 512 963
- US-A- 5 557 338
- US-A- 5 640 688

## Beschreibung

Die Erfindung betrifft ein Fernsehgerät mit mindestens zwei Empfangseinrichtungen zum gleichzeitigen Empfang von innerhalb eines Frequenzbandes empfangbaren Eingangssignalen. Im Stand der Technik sind solche vorrichtungen aus DE-A-4 447 289 und US-A-5 557 338 bekannt.

Die Erfindung betrifft weiter eine Empfangseinrichtung, insbesondere einen Tuner für ein Fernsehgerät zum Empfang von innerhalb eines Frequenzbandes empfangbaren Eingangssignalen.

Bei einem derartigen Fernsehgerät handelt es sich beispielsweise um ein sogenanntes "Bild-im-Bild"-Femsehgerät. Dieses weist zwei getrennte Empfangseinrichtungen, d.h. zwei separate Tuner auf, die jeweils unabhängig voneinander ein Hochfrequenz-Eingangssignal verarbeiten können. Ein "Bild-im-Bild"-Fernsehgerät ist beispielsweise in der Lage, das Empfangssignal eines ersten Fernsehsenders als Hauptbild und darin eingeblendet das Fernsehsignal eines zweiten Fernsehsenders als Kleinbild darzustellen. Für die Aufspaltung des Hochfrequenz-Eingangssignals wird in der Regel ein sogenannter Splitter verwendet, der das zugeführte Hochfrequenz-Eingangssignal aufspaltet und an dessen Ausgang dann zwei separate Hochfrequenz-Signale zur Verfügung stehen, die den nachgeschalteten Empfangseinrichtungen, d.h. Tunern zugeführt werden. Ein derartiger Splitter benötigt in der Regel eine Spannungsversorgung, damit eine vorhandende Rückflußdämpfung ausgeglichen wird.

Aufgabe der vorliegenden Erfindung ist es, ein Fernsehgerät bzw. eine Empfangseinrichtung der eingangs genannten Art anzugeben, das bzw. die auf kostengünstige Weise eine Realisierung einer Signalaufspaltung innerhalb des Fernsehegräts ermöglicht, ohne daß die Gehäusebauform der Empfangseinrichtung verändert werden muß.

Diese Aufgabe wird bei einem Fernsehgerät der eingangs genannten Art dadurch gelöst, daß die erste Empfangseinrichtung einen Richtkoppler aufweist, der zur Aufspaltung des dem Fernsehgerät zugeführten Eingangssignals in eine erstes Fernsehsignal und ein zweites Femsehsignal vorgesehen ist, und daß das zweite Fernsehsignal über einen Signalanschluß der ersten Empfangseinrichtung an die zweite Empfangseinrichtung weitergeleitet wird.

Diese Aufgabe wird bei einer Empfangseinrichtung der eingangs genannten Art dadurch gelöst, daß die Empfangseinrichtung einen Richtkoppler aufweist, der zur Aufspaltung des dem Fernsehgerät zugeführten Eingangssignals in ein erstes Fernsehsignal und ein zweites Fernsehsignal vorgesehen ist, und daß das zweite Fernsehsignal über einen Signalanschluß der Empfangseinrichtung aus dem Gehäuse der Empfangseinrichtung herausgeführt wird.

Die Signalaufspaltung erfolgt mit Hilfe des Richtkopplers innerhalb der Empfangseinrichtung, d.h. innerhalb des Tuners. Ein derartiger Tuner benötigt somit gegenüber einer konventionellen Ausführungsform lediglich einen zusätzlichen Richtkoppler, ansonsten können die Signalanschlüsse des Tuners unverändert bleiben, da das abgetrennte Eingangssignal über einen ohnehin vorhandenen freien Anschluß-PIN des Tuners an einen zweiten Tuner weitergeleitet wird. Die Anordnung des Richtkopplers innerhalb der Empfangseinrichtung, die in der Regel in einem abgeschirmten hochfrequenzdichten Gehäuse angeordnet ist, wird darüberhinaus eine ausreichende Entkopplung der Eingangssignale sowie eine Vermeidung von Störsignalen sichergestellt.

Die Bauweise bezüglich der Anzahl der Anschlüsse der Empfangseinrichtung kann dadurch unverändert bleiben, daß das über den Signalanschluß aus der ersten Empfangseinrichtung herausgeführte zweite Fernsehsignal einem weiteren Ausgangssignal der ersten Empfangseinrichtung beaufschlagt wird und daß außerhalb der ersten Empfangseinrichtung eine Vorrichtung zur Trennung des zweiten Fernsehsignals und des weiteren Ausgangssignals vorgesehen ist.

Ein Ausgleich von Pegelunterschieden kann auf einfache Wiese dadurch erfolgen, daß das zweite Fernsehsignal über einen Verstärker als zweites Eingangssignal an die zweite Empfangseinrichtung zugeführt wird.

Im folgenden wird die Erfindung anhand des in der Zeichnung dargestellten Ausführungsbeispiele näher beschreiben und erläutert. Es zeigen:
- Fig.-1: eine Ausführungsbeispiel eines Fernsehgeräts mit zwei Empfangseinrichtungen und

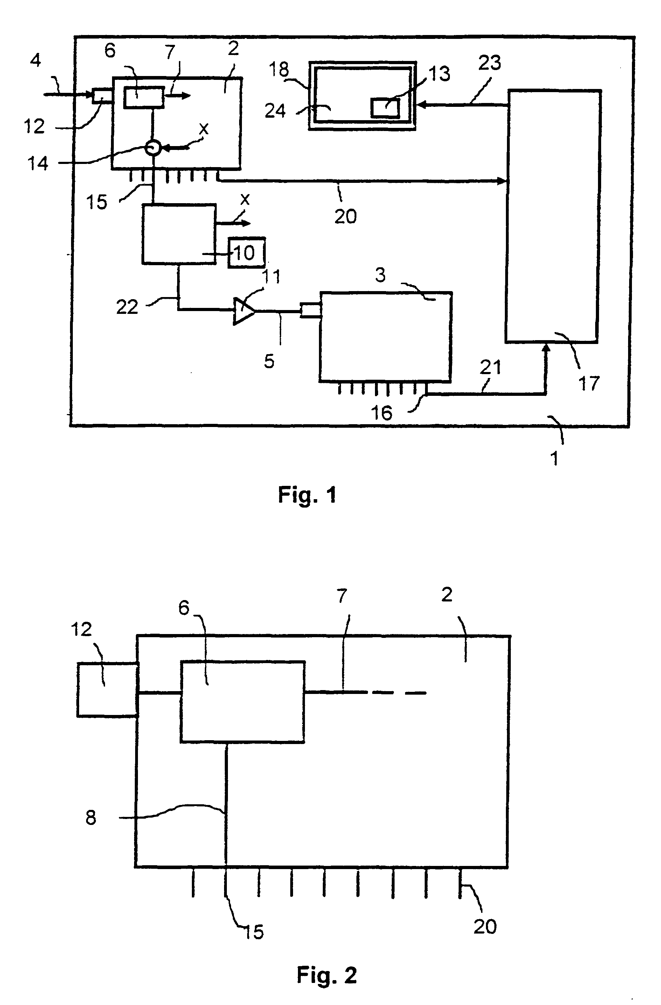

- Fig. 2: ein Ausführungsbeispiel eines Tuners mit integriertem Richtkoppler.

Fig. 1 zeigt ein Ausführungsbeispiel eines Fernsehgeräts 1 mit einer ersten Empfangseinrichtung 2, mit einer zweiten Empfangseinrichtung 3, mit einem Signalverarbeitungsteil 17 sowie mit einem Bildschirm 18. Die erste Empfangseinrichtung 2 weist einen Eingang 12 auf, dem ein Eingangssignal 4 zugeführt wird. Innerhalb der ersten Empfangseinrichtung 2 ist ein Richtkoppler 6 angeordnet, der zur Aufspaltung des Eingangssignals 4 in ein erstes Fernsehsignal 7 und ein zweites Fernsehsignal 8 vorgesehen ist. Das erste Fernsehsignal 7 wird innerhalb der ersten Empfangseinrichtung weiterverarbeitet. Am Ausgang der ersten Empfangseinrichtung 2 liegt ein erstes Ausgangssignal 20, welches einer Signalverarbeitungseinrichtung 17 zugeführt wird. Die erste Empfangseinrichtung 2 weist darüberhinaus Signalanschlüsse 15 auf, über die Signale aus der ersten Empfangseinrichtung 2 herausgeführt werden oder Signale der ersten Empfangsanlage 2 zugeführt werden.ln der ersten Empfangseinrichtung 2 ist bei dem in Fig. 1 dargestellten Ausführungsbeispiel darüberhinaus ein Addierer 14 vorgesehen, dem das zweite Fernsehsignal 8 sowie ein Signal x zugeführt wird. Das aus dem zweiten Fernsehsignal 8 und dem weiteren Signal x gebildete Signal 19 wird über einen der Signalanschlüsse 15 der ersten Empfangseinrichtung 2 an eine Trennvorrichtung 10 weitergeleitet. Die Trennvorrichtung 10 dient der Trennung des zweiten Fernsehsignals und des weiteren Signals x. Am Signalausgang 22 der Trennvorrichtung 10 liegt somit das zweite Fernsehsignal 8, welches über einen Verstärker 11 als zweites Eingangssignal 5 an die zweite Empfangseinrichtung 3 weitergeleitet wird. Die zweite Empfangseinrichtung weist Signalanschlüsse 16 auf. Das Ausgangssignal 21 der zweiten Empfangseinrichtung wird ebenfalls an die Signalverarbeitungseinrichtung 17 zur weiteren Verarbeitung weitergeleitet. Am Ausgangs der Signalverarbeitungseinrichtung 17 liegt ein Ausgangssignal 23, welches dem Bildschirm 18 zugeführt wird. Der Bildschirm 18 dient der Darstellung eines ersten Fernsehsignals 24 als Großbild sowie eines zweiten Fernsehsignals 13 als Kleinbild.

Bei dem in Fig. 1 dargestellten Fernsehgerät sind lediglich die für die Funktion der Erfindung erforderlichen Teile des Fernsehgeräts 1 eingezeichnet. Auf die Darstellung bekannter Komponenten, die jedoch für die Funktion der Erfindung nicht relevant sind, wurde aus Gründen der Übersichtlichkeit verzichtet. Grundprinzip der Signaltrennung bei dem in Fig. 1 dargestellten Fernsehempfänger 1 ist, daß das zugeführte Eingangssignal 4 einen im wesentlichen konventionell aufgebauten Tuner 2 zugeführt wird. Die Besonderheit des Tuners 2 ist, daß mittels des Richtkopplers 6 eine Signalaufspaltung des Eingangssignals 4 erfolgt. Das so entstehende erste Femsehsignal 7 wird in bekannter Weise durch den Tuner 2 weiterverarbeitet und als Ausgangssignal 20 in der Signalaufbereitungseinrichtung 17 zu einem Großbild 24 aufbereitet. Das zweite Fernsehsignal 8 wird über den Signalanschluß 15 aus dem Gehäuse des Tuners 2 herausgeführt. Da bei dem in Fig. 1 dargestellten Ausführungsbeispiel kein separater Signalanschluß vorhanden ist, wird das zweite Fernsehsignal 8 einem geeigneten weiteren Signal x hinzuaddiert, wobei in der Trennvorrichtung 10 wiederum eine Signaltrennung des Signals x und des zweiten Fernsehsignals 8 erfolgt. Mittels der Verstärkerstufe 11 werden ggfs. vorhandene Pegelunterschiede ausgeglichen und auch für die notwendige Entkopplung der beiden Tuner 2, 3 gesorgt. Bei dem zweiten Tuner 3 handelt es sich um einen konventionell aufgebauten Tuner, der eine Verarbeitung des zweiten Eingangssignals 5 durchführt. Das Ausgangssignal des Tuners 3 wird über einen Anschluß-PIN 16 an die Signalverarbeitungseinrichtung 17 weitergeleitet, die hieraus ein als Bild-im-Bild-Einblendung erzeugtes Kleinbild 13 zur Darstellung auf dem Bildschirm 18 bereitstellt.

Fig. 2 zeigt ein Ausführungsbeispiel eines Tuners 2 mit integriertem Richtkoppler 6, der beispielsweise im Zusammenhang mit dem in Fig. 1 dargestellten Fernsehempfänger zum Einsatz kommt. Dabei werden die bereits im Zusammenhang mit Fig. 1 eingeführten Bezugszeichen verwendet. Im Gegensatz zu dem in Fig. 1 dargestellten Ausführungsbeispiel weist der Tuner 2 keinen Addierer auf, sondern das zweite Fernsehsignal 8 wird direkt über einen Ausgangs-PIN nach außen geführt. Der Vorteil des in Fig. 2 dargestellten Tuners ist es, daß der Tuner 2 einerseits in gewohnter Weise ein erstes Fernsehsignal 20 liefert und zusätzlich ein zweites Eingangssignal 8 für einen weiteren Tuner (vgl. Fig. 1) zur Verfügung stellt. Der in Fig. 2 dargestellte Tuner 2 weist dabei die gleiche Gehäusebauform auf wie ein konventioneller Tuner ohne Richtkoppler 6 und kommt mit den vorhandenen Signalanschlüssen aus. Darüberhinaus werden durch die Anordnung des Richtkopplers 6 innerhalb des HF-dichten Gehäuses des Tuners 2 die beiden Tuner in ausreichendem Maße entkoppelt und Störsignale von den HF-Auskoppelsignalen angehalten.

## Patentansprüche

1. Fernsehgerät (1) mit mindestens zwei Tunern (2, 3) zum gleichzeitigen Empfang von innerhalb eines Frequenzbandes empfangbaren Eingangssignalen (4, 5),
**dadurch gekennzeichnet,**
**daß** der erste Tuner (2) einen Richtkoppler (6) aufweist, der zur Aufspaltung des dem Fernsehgerät zugeführten Eingangssignals (4) in ein erstes Fernsehsignal (7) und ein zweites Fernsehsignal (8) vorgesehen ist, und daß das zweite Fernsehsignal (8) über einen Signalanschluß (9) des ersten Tuners (2) an den zweiten Tuner (3) weitergeleitet wird.

2. Fernsehgerät nach Anspruch 1
**dadurch gekennzeichnet,**
**daß** das über den Signalanschluß (9) aus dem ersten Tuner (2) herausgeführte zweite Fernsehsignal (8) einem weiteren Ausgangssignal (x) der ersten Tuners (2) beaufschlagt wird und daß außerhalb des ersten Tuners (8) eine Vorrichtung (10) zur Trennung des zweiten Fernsehsignals (8) und des weiteren Ausgangssignals (x) vorgesehen ist.

3. Fernsehgerät nach einem der Ansprüche 1 oder 2,
**dadurch gekennzeichnet,**
**daß** ddas zweite Fernsehsignal (8) über einen Verstärker (11) als zweites Eingangssignal (5) an den zweite Tuner (3) zugeführt wird.

4. Tuner zum Empfang von innerhalb eines Frequenzbandes empfangbaren Eingangssignalen (4, 5),
**dadurch gekennzeichnet,**
**daß** der Tuner (2) einen Richtkoppler (6) aufweist, der zur Aufspaltung des dem Fernsehgerät (1) zugeführten Eingangssignals (4) in ein erstes Fernsehsignal (7) und ein zweites Fernsehsignal (8) vorgesehen ist, und daß das zweite Fernsehsignal (8) über einen Signalanschluß (9) des Tuners (2) aus dem Gehäuse des Tuners (2) herausgeführt wird.

5. Tuner nach Anspruch 4,
**dadurch gekennzeichnet,**
**daß** das über den Signalanschluß (9) aus dem Tuner (2) herausgeführte Fernsehsignal (8) einem weiteren Ausgangssignal (x) des Tuners (2) beaufschlagt wird.

## Claims

1. Television set (1) having at least two tuners (2, 3) for the simultaneous reception of input signals (4, 5), receivable within a frequency band, **characterized in that** the first tuner (2) has a directional coupler (6) that is provided for splitting the input signal (4) fed to the television set into a first television signal (7) and a second television signal (8) and **in that** the second television signal (8) is forwarded to the second tuner (3) via a signal terminal (9) of the first tuner (2).

2. Television set according to Claim 1, **characterized in that** the second television signal (8) brought out of the first tuner (2) via the signal terminal (9) is acted on by a further output signal (x) of the first tuner (2) and **in that**, outside the first tuner (8), a device (10) is provided for separating the second television signal (8) and the further output signal (x).

3. Television set according to either of Claims 1 or 2, **characterized in that** the second television signal (8) is fed to the second tuner (3) via an amplifier (11) as second input signal (5).

4. Tuner for receiving input signals (4, 5) receivable within a frequency band, **characterized in that** the tuner (2) has a directional coupler (6) that is provided for splitting the input signal (4) fed to the television set (1) into a first television signal (7) and a second television signal (8) and **in that** the second television signal (8) is brought out of the housing of the tuner (2) via a signal terminal (9) of the tuner (2).

5. Tuner according to Claim 4, **characterized in that** the television signal (8) brought out of the tuner (2) via the signal terminal (9) is acted on by a further output signal (x) of the first tuner (2).

## Revendications

1. Appareil de télévision (1) comportant au moins deux tuners (2, 3) pour recevoir simultanément des signaux d'entrée (4, 5) pouvant être reçus à l'intérieur d'une gamme de fréquences, **caractérisé en ce**
**que** le premier tuner (2) comporte un coupleur directionnel (6), qui est prévu pour diviser le signal d'entrée (4) envoyé à l'appareil de télévision en un premier signal de télévision (7) et un second signal de télévision (8), et que le second signal de télévision (8) est transmis par l'intermédiaire d'une borne (9) de transmission de signaux du premier tuner (2) au second tuner (3).

2. Appareil de télévision selon la revendication 1, **caractérisé en ce**
**que** le second signal de télévision (8), délivré par le premier tuner (2) par l'intermédiaire de la borne (9) de transmission de signaux est ajouté à un autre signal de sortie (x) du premier tuner (2) et qu'en dehors du premier tuner (2), il est prévu un dispositif (10) pour séparer le second signal de télévision (8) et l'autre signal de sortie (x).

3. Appareil de télévision selon l'une des revendications 1 ou 2, **caractérisé en ce**
**que** le second signal de télévision (8) est envoyé en tant que second signal d'entrée (5), par l'intermédiaire d'un amplificateur (11) au second tuner (3).

4. Tuner pour la réception de signaux d'entrée (4, 5) pouvant être reçus à l'intérieur d'une gamme de fréquences, **caractérisé en ce**
**que** le tuner (2) possède un coupleur directionnel (6), qui est prévu pour diviser le signal d'entrée (4) envoyé à l'appareil de télévision en un premier signal de télévision (7) et un second signal de télévision (8), et que le second signal de télévision (8) est transmis par l'intermédiaire d'une borne (9) de transmission de signaux du premier tuner (2) au second tuner (3).

5. Tuner selon la revendication 4, **caractérisé en ce**
**que** le second signal de télévision (8), délivré par le premier tuner (2) par l'intermédiaire de la borne (9) de transmission de signaux est ajouté à un autre signal de sortie (x) du premier tuner (2).
